**Europäisches Patentamt**

**European Patent Office**

**Office européen des brevets**

(19)

(11) **EP 0 711 908 A2**

(12) **EUROPÄISCHE PATENTANMELDUNG**

(43) Veröffentlichungstag:
15.05.1996 Patentblatt 1996/20

(51) Int. Cl.$^6$: **F02D 35/00**

(21) Anmeldenummer: 95112827.1

(22) Anmeldetag: 16.08.1995

(84) Benannte Vertragsstaaten:
**DE FR GB IT**

(30) Priorität: **10.10.1994 DE 4436085**

(71) Anmelder: **MERCEDES-BENZ AG**
**D-70327 Stuttgart (DE)**

(72) Erfinder: **Moll, Günter, Dipl.-Ing.**
**D-70736 Fellbach (DE)**

(54) **Regelungsverfahren zur Optimierung der Schadstoffemission einer Verbrennungsanlage**

(57)    Die Erfindung betrifft ein Verfahren zur Optimierung der Schadstoffemission einer Verbrennungsanlage, insbesondere einer Brennkraftmaschine, wobei die gemessenen Schadstoffanteile im Abgas zur Regelung der Verbrennungsanlage benutzt werden. Erfindungsgemäß wird vorgeschlagen, zumindest zwei Schadstoffanteile im Abgas über Sensoren zu ermitteln und daraus ein bewertetes Summensignal zu bestimmen. Dieses Summensignal wird dann durch Ansteuerung eines die Abgaszusammensetzung beeinflussenden Betriebsparameters auf ein Minimum geregelt. Diese Minimierung des Summensignals kann gegebenenfalls auch für mehrere die Abgaszusammensetzung beeinflussende Betriebsparameter laufend sequentiell durchgeführt werden. Dieses Verfahren hat zum einen den Vorteil, daß nur noch ein Regeleingangssignal verwendet wird. Zum anderen kann die Abgasregelung durch eine Änderung der Gewichtungsfaktoren auf einfache Art und Weise an unterschiedliche gesetzliche Vorgaben oder aber auch an unterschiedliche Umgebungs- oder Betriebsbedingungen angepaßt werden.

EP 0 711 908 A2

# Beschreibung

Die Erfindung betrifft ein Verfahren zur Optimierung der Schadstoffemission einer Verbrennungsanlage, insbesondere einer Brennkraftmaschine gemäß dem Oberbegriff des Patentanspruchs 1.

Aus der DE 42 15 942 A1 ist eine Vorrichtung zur Überwachung der Abgaskonzentration mehrerer im Abgas einer Brennkraftmaschine enthaltener Schadstoffe bekannt, bei der die Konzentrationen von Stickoxiden und Kohlenwasserstoffen im Abgas auf ein vorgegebenes Verhältnis, bei dem ein in der Abgasleitung vorgesehener NOx-Reduktionskatalysator mit dem besten Wirkungsgrad arbeitet, eingestellt wird. Nachteilig bei diesem Verfahren ist die Tatsache, daß nicht direkt der Schadstoffausstoß der Brennkraftmaschine minimiert wird, sondern daß lediglich bessere Betriebsbedingungen für einen nachgeschalteten Katalysator eingestellt werden.

Insbesondere bei Brennkraftmaschinen sind viele Methoden zur Beeinflussung der Abgaszusammensetzung bekannt. Hierbei werden einzelne die Abgaszusammensetzung beeinflussende Betriebsparameter in Abhängigkeit vom Betriebszustand oder vom Anteil einer einzelnen Schadstoffkomponente im Abgas gesteuert oder geregelt. Die Veränderung eines Betriebsparameters hat jedoch im allgemeinen nicht nur einen Einfluß auf eine, sondern auf mehrere der Schadstoffkomponenten, wobei oft gegenläufige Abhängigkeiten vorhanden sind. Daher beeinflussen sich die einzelnen Regel- oder Steuerverfahren oftmals derart, daß die Reduzierung einer Schadstoffkomponente zu einer Erhöhung einer anderen Schadstoffkomponente führt.

Die Aufgabe der Erfindung besteht darin ein Verfahren zu schaffen, mit dem der mehrere Schadstoffkomponenten umfassende Schadstoffausstoß einer Verbrennungsanlage auf einfache Art und Weise optimiert werden kann.

Die Aufgabe wird erfindungsgemäß durch die kennzeichnenden Merkmale des Patentanspruchs 1 gelöst.

Das beanspruchte Verfahren weist den Vorteil auf, daß zur Einstellung der die Abgaszusammensetzung beeinflussenden Betriebsparameter nur noch ein Regeleingangssignal, welches die Abgasqualität mehr oder weniger direkt repräsentiert, verwendet wird. Müssen mehrere solcher Betriebsparameter eingestellt werden, so ist dies in einem einzigen gemeinsamen Regelungsverfahren möglich.

Da die Definition von Abgasqualität keine feststehende Größe ist, sondern auch von gesetzlichen Vorgaben oder gesellschaftlichen Einflüssen abhängt und somit sowohl regional als auch zeitlich veränderlich ist, besteht ein weiterer wesentlicher Vorteil des Verfahrens darin, daß die Ermittlung des Summensignals auf einfache Art und Weise an die veränderlichen Vorgaben angepaßt werden kann. Bei einer gewichteten Summation der einzelnen Schadstoffanteile ist dies beispielsweise durch variable Vorgabe der Gewichtungsfaktoren möglich.

Die Verwendung von Startkennfeldern für die Betriebsparameter kann zu einer Beschleunigung des Regelvorgangs führen. Werden selbstlernende Kennfelder eingesetzt, so kann der Einfluß von langsam veränderlichen Parametern, beispielsweise aufgrund des Alterungsprozesses, beseitigt werden.

Weitere Vorteile und Ausgestaltungen gehen aus den Unteransprüchen und der Beschreibung hervor. Die Erfindung ist nachstehend für ein Verfahren mit zwei einstellbaren Betriebsparametern anhand einer Zeichnung, die einen die Abgasqualität in Abhängigkeit von den einzustellenden Betriebsparametern repräsentierende Kurvenschar zeigt, näher beschrieben.

Wesentlich für das Verfahren ist die Erfassung eines die Abgasqualität der Verbrennungsanlage charakterisierenden Parameters. Hierzu werden die Anteile $s_i$ verschiedener im Abgas enthaltenen Schadstoffkomponenten mit Hilfe eines oder mehrerer Sensoren, die entweder direkt im Abgas angeordnet oder über geeignete Entnahmestellen mit der Abgasleitung verbunden sind, quantitativ ermittelt. In einem Steuergerät wird dann aus diesen einzelnen Schadstoffanteilen $s_i$ ein bewertetes Summensignal

$$S = \Sigma_i a_i{}^* s_i$$

berechnet, wobei $a_i$ vorgegebene Gewichtungsfaktoren bezeichnen. Erfindungsgemäß kann zur Berechnung des Summensignals S jedoch auch jede andere Berechnungsvorschrift, beispielsweise unter Verwendung von Produkten, Verhältnissen oder Potenzen von Schadstoffanteilen $s_i$, verwendet werden.

Die Auswahl der geeigneten Berechnungsvorschrift beziehungsweise der Gewichtungsfaktoren $a_i$ hängt von der Definition des Begriffs Abgasqualität ab. Diese Definition muß nicht einheitlich erfolgen, sondern kann regional oder zeitlich, beispielsweise auch aufgrund der unterschiedlichen Festlegung von gesetzlichen Grenzwerten, unterschiedlich vorgegeben werden. Die Wahl der Berechnungsvorschrift beziehungsweise der Gewichtungsfaktoren $a_i$ beeinflußt das Verhältnis der zulässigen Schadstoffanteile $s_i$. Schadstoffanteile, die eher tolerierbar sind, werden weniger stark gewichtet, während andere Schadstoffanteile, die extrem gefährlich sind, extrem stark gewichtet werden.

Die Messung der Schadstoffanteile $s_i$ kann durch einzelne Schadstoffsensoren oder mit Hilfe eines einzigen Abgasqualitätssensors erfolgen. Ein solcher Abgasqualitätssensor reagiert nicht nur auf einen bestimmten, sondern auf eine Vielzahl von Schadstoffen. Die Empfindlichkeiten auf die einzelnen Schadstoffe, die sogenannten Querempfindlichkeiten, können hierbei entweder bei der Herstellung des Sensors fest vorgegeben werden oder im Betrieb von außen, beispielsweise über ein Steuergerät, einstellbar sein. Bei der Verwendung eines Steuergeräts ist es außerdem möglich, eventuell auftretende Temperaturempfindlichkeiten des Sensors zu korrigieren. Schließlich ist es auch möglich, das Summensignal S mit anderen Größen zu verknüpfen. Beispielsweise kann als Regelgröße das Produkt aus dem Summensignal S und der pro Zeiteinheit anfallenden Abgasmenge verwendet werden. In diesem Fall würde die Regelung nicht nur einen Einfluß auf die Abgaszusammensetzung, sondern auch auf die absoluten Schadstoffmengen haben.

Ein Anwendungsgebiet für das erfindungsgemäße Verfahren ist die Abgasoptimierung von Brennkraftmaschinen. Als die Abgaszusammensetzung beeinflussende Betriebsparameter P kommen hierbei unter anderem Abgasrückführung, Abgasdrosselung, Sekundärluftzufuhr, Abgasnachheizung, Katalysatorheizung, Ansaugluftmenge, Ansaugluftdrosselung, Luftvorheizung, Aufladung, Lufttemperatur, Getriebeansteuerung, Kraftstoffmenge, Einspritzzeitpunkt, Kraftstofftemperatur, Zündzeitpunkt oder Steuerzeiten der Gaswechselventile in Frage. Gemessenen werden verschiedene Schadstoffanteile im Abgas, beispielsweise Stickoxide NOx, Kohlenmonoxid CO und Kohlenwasserstoffe HC, aus denen dann anschließend ein bewertetes Summensignal S ermittelt wird. Verwendet man die weiter oben beschriebene Berechnungsvorschrift für das Summensignal S, so können die zugehörigen Gewichtungsfaktoren $a_i$ an die gültigen Grenzwerte angepaßt werden. Liegt beispielsweise der Grenzwert für das Kohlenmonoxid CO um das dreifache höher, als der Grenzwert für die Stickoxide NOx, so wird beispielsweise der Gewichtungsfaktor $a_{NO_x}$ für die Stickoxide NOx dreimal so groß gewählt, wie der Gewichtungsfaktor $a_{CO}$ für das Kohlenmonoxid CO.

Das so ermittelte Summensignal S wird dann laufend auf ein Minimum geregelt, in dem die die Abgaszusammensetzung beeinflussenden Betriebsparameter P verändert werden. Ein einfaches Verfahren besteht darin, den ersten Betriebsparameter P schrittweise zu verstellen und anschließend durch einen relativen Vergleich festzustellen, ob die Verstellrichtung sinnvoll war oder nicht. Damit wird solange fortgefahren, bis hinsichtlich des ersten Betriebsparameters P die optimale Einstellung gefunden ist, das heißt bis das Summensignal S sein lokales Minimum erreicht. Anschließend werden diese Schritte dann für alle weiteren Betriebsparameter P wiederholt. Sind so alle in Frage kommenden Betriebsparameter P abgearbeitet, so wird wieder beim ersten Betriebsparameter P begonnen, da es für diesen unter den veränderten Randbedingungen eine andere optimale Einstellung geben könnte.

Da es bei diesem Verfahren nicht auf absolute, sondern nur auf die relative Empfindlichkeit des Sensors für unterschiedliche Schadstoffanteile ankommt, sind Streuungen oder Alterungseffekte des Sensors bezüglich seiner absoluten Empfindlichkeit ohne Belang. Das liegt daran, daß die Messungen nicht absolut bewertet werden, sondern lediglich Messungen zu unterschiedlichen Zeitpunkten relativ zueinander verglichen werden. Dadurch kann die Herstellung der Sensoren preiswerter erfolgen oder zumindest die Ausschußrate vermindert werden.

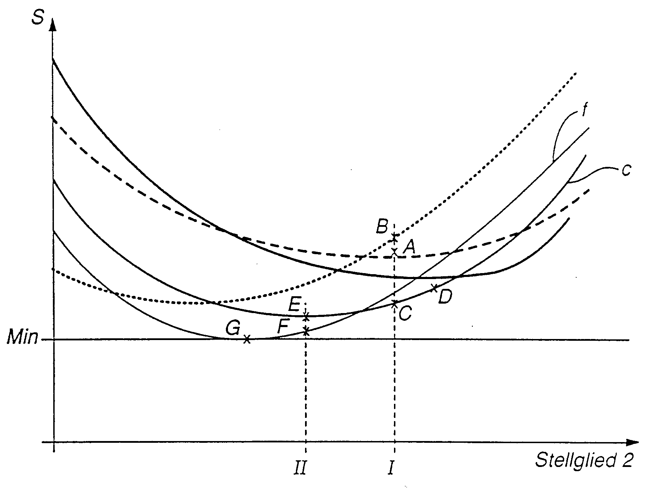

Ein einfaches Verfahren für eine stationäre Verbrennungsanlage, bei der lediglich zwei Betriebsparameter über geeignete Stellglieder verändert werden, zeigt die Zeichnung. Hierbei ist nach oben das Summensignal S beziehungsweise die Stellung eines ersten Stellgliedes und nach rechts die Stellung eines zweiten Stellgliedes aufgetragen. Die eingezeichnete Kurvenschar zeigt die Abhängigkeit des Summensignals S von der Stellung des ersten Stellgliedes in Abhängigkeit von der jeweiligen Stellung des zweiten Stellgliedes. Der Regelvorgang wird in Punkt A begonnen, indem das erste Stellglied bei fester Position I des zweiten Stellgliedes in beliebiger Richtung, beispielsweise zum Punkt B verstellt wird. Hierbei wird eine Verschlechterung des Summensignals S festgestellt, so daß die Verstellrichtung umgekehrt wird und das erste Stellglied die Position C erreicht, in der das Summensignal S ein lokales Minimum aufweist.

Im nächsten Schritt wird dann das erste Stellglied in der Position C festgehalten, wobei die mit c gekennzeichnete durchgezogene Linie den Verlauf des Summensignals S in Abhängigkeit von der Position des zweiten Stellgliedes bei dieser Position C des ersten Stellglieds zeigt. Anschließend wird dann das zweite Stellglied in eine beliebige Richtung, beispielsweise zum Punkt D verstellt. Hierbei wird wiederum eine Verschlechterung des Summensignals S erkannt und daher die Verstellrichtung umgekehrt. Dieser zweite Schritt ist dann beendet, wenn in der Position E das Minimum des Summensignals S bei festgehaltenem ersten Stellglied erreicht wird.

Im dritten Schritt wird dann wiederum das zweite Stellglied in der Position II festgehalten und das erste Stellglied solange verstellt, bis in Position F wiederum das Minimum des Summensignals S bei festgehaltenem zweiten Stellglied erreicht wird. Im letzten Schritt wird dann wiederum das erste Stellglied festgesetzt, wobei die mit f gekennzeichnete durchgezogene Linie den Verlauf des Summensignals S in Abhängigkeit von der Position des zweiten Stellgliedes bei dieser Position F des ersten Stellglieds zeigt. Das absolute Minimum des Summensignals S wird erreicht, sobald das zweite Stellglied in Position G gelangt ist. An dieser Stelle kann dann bei einer stationären Verbrennungsanlage das Optimierungsverfahren abgebrochen werden.

Bei dynamischen Systemen, beispielsweise einer Brennkraftmaschine in einem Kraftfahrzeug, muß das Verfahren laufend durchgeführt werden, da es kein absolutes Minimum für das Summensignal S gibt. Das Minimum für das Summensignal S hängt hierbei nämlich von weiteren Betriebsparametern, beispielsweise von der Last oder der Drehzahl der Brennkraftmaschine ab. Da sich diese Betriebsparameter laufend ändern, muß das Regelungsverfahren die die Abgaszusammensetzung beeinflussenden Betriebsparameter P laufend an die veränderten Randbedingungen anpassen.

Bei Anwendungen mit hoher Dynamik und mit vielen einzustellenden Betriebsparametern P ist es möglich, daß das reine Regelungsverfahren zu träge reagiert. In diesem Fall kann das Regelungsverfahren mit einem Steuerungsverfahren kombiniert werden. Die Steuerung macht dann in Abhängigkeit vom Betriebspunkt die Stellgliedvoreinstellung, während die Regelung über das oben beschriebene Optimierungsverfahren lediglich die Feineinstellung vornimmt. Die Startwerte $P(t_0)$ für die einzelnen Betriebsparameter $P$ könnten beispielsweise in Abhängigkeit vom Betriebspunkt in Kennfeldern $K_i$ abgelegt werden. Bei der Feineinstellung könnten auch Streuungen oder Störgrößen, die die Steuerung allein nicht erkennen würde, ausgeglichen werden. Da einige dieser Störungen, beispielsweise durch Herstellungstoleranzen oder aufgrund von Alterungsvorgängen, eine geringe Dynamik aufweisen, also immer wieder zu den gleichen Korrekturen der Steuereinstellung durch die Regelung führen würden, kann eine lernfähige Steuerung zusätzlich die jeweils letzte als optimal erkannte Stellgliedeinstellung zum jeweiligen Betriebspunkt in die Kennfelder $K_i$ übernehmen. Derart von den eigentlichen Steuerungsaufgaben entlastet kann dann das Optimierungsverfahren mit relativ hoher Dynamik arbeiten.

Um Fehlfunktionen der Verbrennungsanlage auszuschließen können außerdem für die einzelnen Betriebsparameter $P_i$ zulässige Parameterbereiche betriebspunktabhängig vorgegeben werden. Als weitere Randbedingung können außerdem noch Maximalwerte für einzelne Schadstoffanteile $s_i$ vorgegeben werden. Hierdurch kann gewährleistet werden, daß auf der einen Seite zwar die Abgasqualität insgesamt als Regelgröße in das Verfahren eingeht. Auf der anderen Seite kann dann aber auch gewährleistet werden, daß vorgegebene Grenzwerte für einzelne extrem gefährliche Schadstoffanteile auf keinen Fall überschritten werden.

Ein wesentlicher Vorteil des Verfahrens besteht darin, daß die Berechnungsvorschrift für das Summensignal $S$ und damit die Regelstrategie auf einfache Art und Weise verändert und damit auch an den jeweilige Einsatzort individuell angepaßt werden kann. Angewandt auf das Einsatzbeispiel in einem Fahrzeug könnte also eine Anpassung an die Grenzwertvorschriften in einem anderen Land oder an geänderte Grenzwertvorschriften in einem einzigen Land - insbesondere als einfache Nachrüstlösung für Altfahrzeuge - ohne Änderung des Motors oder der Berechnungsvorschrift auf zwei Arten erfolgen. Bei einem Abgasqualitätssensor mit innerer Summenbildung muß der Sensor ausgetauscht werden. Bei einem Abgasqualitätssensor, bei dem die Summenbildung in einem separaten Steuergerät erfolgt, muß der Sensor selbst nicht ausgetauscht werden. Lediglich das Steuergerät muß umcodiert, umprogrammiert oder ausgetauscht werden.

Bei Verwendung eines Steuergeräts kann man außerdem unterschiedlichen Anforderungen in unterschiedlichen Zuständen optimal Rechnung tragen. Beispielsweise durch unterschiedliche Berechnungsvorschriften - zum Beispiel durch Rückgriff auf unterschiedliche, im Steuergerät abgelegte Gewichtungsfaktoren - für den Stadtverkehr oder für Tunneldurchfahrten, die das Gefährdungspotential der einzelnen Schadstoffanteile für den Menschen widerspiegelt. Schließlich können sogar Wechsel der Berechnungsvorschriften beim Überfahren von Grenzen mit unterschiedlichen Grenzwerten, beispielsweise Smog- oder auch Staatsgrenzen, realisiert werden. Der Umschaltvorgang kann auf unterschiedliche Weisen aktiviert werden. Smoggrenzen können zum Beispiel über einen Smogsensor der Klimaanlage erkannt werden, wobei dann ein entsprechendes Signal an das Steuergerät weitergegeben wird. Zur Erkennung einer Stadtfahrt kann außerdem das Geschwindigkeitssignal ausgewertet werden. Schließlich ist es auch denkbar, über entsprechende Sendestationen am Straßenrand das Steuergerät auf das Überfahren einer entsprechenden Grenze hinzuweisen und gleichzeitig die neuen gültigen Grenzwerten zu übertragen. Dieses Ausführungsbeispiel ist insbesondere vorteilhaft für Stadt- und Ländergrenzen, sowie an Tunneleinfahrten. Hierbei können beispielsweise Sende- und Empfangsstationen von Verkehrsleitsystemen verwendet werden, wobei in diesem Fall weitere Informationen, beispielsweise über die Verkehrslage, berücksichtigt werden können.

Neben dem im Ausführungsbeispiel beschriebenen Einsatz in einem Kraftfahrzeug kann das beschriebene Verfahren selbstverständlich für jegliche Art von Verbrennungsanlagen, die mindestens eine Möglichkeit zum abgasrelevanten Regeleingriff bietet, verwendet werden. In Frage kommen hierzu beispielsweise Haus- oder Industriefeuerungsanlagen, Turbinen oder chemische beziehungsweise verfahrenstechnische Anlagen. Außerdem soll das Verfahren nicht auf die oben beschriebene sequentielle Optimierung der einzelnen Stellgliedpositionen beschränkt bleiben, sondern es soll auch beliebig andere Minimierungsverfahren, beispielsweise über mehrdimensionale Gradientenbildung, umfassen.

**Patentansprüche**

1. Verfahren zur Optimierung der Schadstoffemission einer Verbrennungsanlage, wobei zumindest zwei der im Abgas enthaltenen Schadstoffkomponenten quantitativ erfaßt werden und wobei zumindest ein die Abgaszusammensetzung beeinflussender Betriebsparameter der Verbrennungsanlage in Abhängigkeit von den ermittelten Schadstoffkomponenten eingestellt wird, **dadurch gekennzeichnet,** daß aus den quantitativ erfaßten Schadstoffanteilen $(s_i)$ ein bewertetes Summensignal $(S)$ ermittelt wird, welches durch Ansteuerung des zumindest einen die Abgaszusammensetzung beeinflussenden Betriebsparameters $(P)$ auf ein Minimum geregelt wird.

2. Verfahren nach Anspruch 1, **dadurch gekennzeichnet,** daß das Summensignal $(S)$ durch Addition der einzelnen Schadstoffanteile $(s_i)$ ermittelt wird.

3.  Verfahren nach Anspruch 1,
    **dadurch gekennzeichnet,**
    daß die einzelnen Schadstoffanteile ($s_i$) jeweils durch einen vorgegebenen Faktor ($a_i$) gewichtet werden.

4.  Verfahren nach Anspruch 3,
    **dadurch gekennzeichnet,**
    daß die Gewichtungsfaktoren ($a_i$) in Abhängigkeit von Betriebsparametern, Umgebungsbedingungen und/oder gesetzlichen Vorgaben veränderbar sind.

5.  Verfahren nach Anspruch 1,
    **dadurch gekennzeichnet,**
    daß mehrere die Abgaszusammensetzung beeinflussenden Betriebsparameter (P) in Abhängigkeit von dem Summensignal (S) angesteuert werden, wobei das Summensignal (S) jeweils für einen Betriebsparameter (P) auf ein Minimum geregelt und dieser Regelvorgang dann anschießend für alle Betriebsparameter (P) laufend sequentiell wiederholt wird.

6.  Verfahren nach Anspruch 1,
    **dadurch gekennzeichnet,**
    daß für die Betriebsparameter ($P_i$) Startwerte ($P(t_0)$)in einem Kennfeld ($K_i$) abgelegt sind.

7.  Verfahren nach Anspruch 6,
    **dadurch gekennzeichnet,**
    daß die Kennfelder ($K_i$) adaptiv angepaßt werden.

8.  Verfahren nach Anspruch 1,
    **dadurch gekennzeichnet,**
    daß für die Betriebsparameter ($P_i$) zulässige Parameterbereiche betriebspunktabhängig vorgegeben werden.

9.  Verfahren nach Anspruch 1,
    **dadurch gekennzeichnet,**
    daß für einzelne Schadstoffanteile ($s_i$) Grenzwerte, die nicht überschritten werden dürfen, vorgegeben werden.

10. Verfahren nach Anspruch 1,
    **dadurch gekennzeichnet,**
    daß die Schadstoffanteile ($s_i$) auf die Abgasmenge pro Zeiteinheit normiert werden.